Europäisches Patentamt

European Patent Office

Office européen des brevets

(19)

(11) Veröffentlichungsnummer: **0 085 354**
A2

# (12) EUROPÄISCHE PATENTANMELDUNG

(21) Anmeldenummer: 83100425.4

(22) Anmeldetag: 19.01.83

(51) Int. Cl.³: **B 23 B 51/04**

(30) Priorität: 30.01.82 DE 3203134

(43) Veröffentlichungstag der Anmeldung:
10.08.83 Patentblatt 83/32

(84) Benannte Vertragsstaaten:
AT BE CH DE FR GB IT LI LU NL SE

(71) Anmelder: TBT Tiefbohrtechnik GmbH und Co. KG.
Siemensstrasse 1
D-7417 Dettingen(DE)

(72) Erfinder: Weiblen, Richard
Birkenweg 42
D-7420 Münsingen-Dottingen(DE)

(72) Erfinder: Jenny, Werner
Sternbergstrasse 15
D-7420 Münsingen(DE)

(74) Vertreter: Dreiss, Hosenthien & Fuhlendorf
Gerokstrasse 6
D-7000 Stuttgart 1(DE)

(54) Tiefbohrwerkzeug.

(57) Das Tiefbohrwerkzeug, gebildet durch ein mit einem Innenkanal versehenes Rohr, an dessen Ende ein Bohrkopf angebracht ist, ist gemäß der Erfindung in zwei Rohrabschnitte unterteilt, von denen der in Bohrrichtung hintere Rohrabschnitt einen größeren Durchmesser aufweist wie der Bohrkopf. Damit kann das gesamte Bohrwerkzeug einschließlich Bohrkopf ohne Demontage durch eine Lagerung oder einen Bohrölzuführapparat hindurch ausgewechselt werden.

EP 0 085 354 A2

Croydon Printing Company Ltd.

Fig.1

## Beschreibung

Die Erfindung betrifft ein Tiefbohrwerkzeug, gebildet durch ein mit einem Innenkanal versehenes Rohr, an dessen Ende ein Bohrkopf angebracht ist.

Derartige Tiefbohrwerkzeuge sind bekannt. Sie werden beim Anbohren durch eine an die Stirnfläche einer Bohrung angedrückte Bohrbuchse geführt. Zwei bekannte Tiefbohrverfahren sind das sog. BTA-Verfahren und das Einlippen-Bohrverfahren. Bei beiden Verfahren weist das Bohrwerkzeug in seinem Inneren einen Kanal auf. Beim BTA-Verfahren wird der Bohrkopf dadurch gekühlt und gleichzeitig die beim Bohren entstehenden Späne abgeführt, daß außen entlang des Umfangs des den Bohrkopf tragenden Rohres Bohröl (Kühlschmierstoff) in die Bohrung hineingepresst wird, das unter Mitnahme der Späne, durch den Kanal im Innern des Werkzeuges abgeführt wird. Der Zufuhr des Bohröls dient der Bohrölzuführapparat (Boza), der durch ein Gehäuse mit zylindrischen Innenraum gebildet wird, in das das Bohröl hineingepresst

4301 060

wird und der gegenüber der Bohrung und gegenüber der Bohrspindel abgedichtet ist. Er dient ferner auch der Lagerung des den Bohrkopf tragenden Rohres im Abstand von der Bohrung. Beim Einlippen-Bohrverfahren wird das Bohröl über den Innenkanal des Werkzeuges an die Bohrschneiden geführt und entlang des Umfangs des den Bohrkopf tragenden Rohres, also in dem Raum zwischen diesem und der Bohrung, zusammen mit den Spänen abgeführt.

Damit Bohröl durch den Raum zwischen dem Umfang des Rohres und der Bohrung in diese hineingepresst (BTA-Verfahren) oder aus dieser abgeführt (Einlippen-Bohrverfahren) werden kann, und um ein Andrücken des Rohres an der Innenwand der Bohrung zu vermeiden, haben die Bohrschneiden am Bohrkopf einen Durchmesser, der etwas größer ist als der Durchmesser das den Bohrkopf tragende Rohr. Daher kann man beim Auswechseln des Werkzeuges den Bohrkopf nicht durch den Boza zurückziehen. Man muß erst den Bohrkopf von dem Rohr abschrauben. Erst danach kann das Rohr durch den Boza bzw. die das Rohr im Boza abdichtende Stopfbuchse herausgezogen werden.

- 3 -                    0085354

Dies bedeutet letztlich, daß man das aus Rohr
und Bohrkopf bestehende Werkzeug vor dem Auswechseln an der Werkzeugspindel erst zerlegen
muß.

Dies ist insbesondere dann ein Nachteil, wenn
man einen vollautomatischen Werkzeugwechsel
durchführen will. Dazu soll das gesamte Werkzeug, bestehend aus Rohr und aufgeschraubtem
Bohrkopf sowie einem am Ende des Rohres angesetzten Steckkonus, durch einen Greifer erfasst
und ausgewechselt werden. Dazu musste man aber
das gesamte Werkzeug aus dem Boza bzw. den
darin vorgesehenen Dichtungen (Stopfbuchse)
herausziehen können. Dies ist aber mit den seitherigen Werkzeugen nicht möglich, weil - wie
erwähnt - einerseits die Stopfbuchse am Ende
des Boza auf den Durchmesser des Rohres abgestimmt ist, andererseits der Durchmesser des
Bohrkopfes etwas größer als der des Rohres ist.

Es ist Aufgabe der Erfindung, bei einer Tiefbohrmaschine einen Werkzeugwechsel zu ermöglichen, ohne das Werkzeug auseinanderschrauben
zu müssen.

4301 060

Gemäß der Erfindung wird diese Aufgabe durch ein Tiefbohrwerkzeug der eingangs genannten Art gelöst, bei dem das Rohr durch zwei Rohrabschnitte gebildet wird, von denen der Außendurchmesser des in Bohrrichtung vorderen Rohrabschnittes geringer als der Bohrdurchmesser des Bohrkopfes und der Bohrdurchmesser des Bohrkopfes geringer als der Außendurchmesser des in Bohrrichtung hinteren Rohrabschnittes ist.

Durch diese gelingt es also in überraschender einfacher Weise, das Werkzeug so auszugestalten, daß es aus dem Boza, in dem der hintere im Durchmesser stärkere Rohrabschnitt in einer Dichtung und/oder einem Lager sitzt, herausgezogen werden kann. Damit wird ein automatischer Werkzeugwechsel möglich. Selbst für nichtautomatischen Betrieb ist dies von Vorteil, da auch hier das Auswechseln des gesamten Werkzeuges wesentlich einfacher wird. Der hintere Teil des Werkzeuges wird durch den im Durchmesser stärkeren Rohrabschnitt wesentlich stabiler. Es ergibt sich eine geringere Neigung zu Schwingungen etc. Außerdem kann man den hinteren Abschnitt und damit die Führung im Boza oder in einem Lager für verschiedene Bohrköpfe jeweils gleich ausbilden.

. 4301 060

- 5 -                    0085354

Aus dieser Konstruktion folgt eine höhere
Gleitgeschwindigkeit am dickeren Rohrende. Deshalb sieht eine vorteilhafte Fortbildung der
Erfindung auch eine gegenüber den seither für
diesen Zweck verwendeten Stopfbuchsendichtungen
neue und verbesserte Abdichtung an dieser Stelle
vor. Sie ermöglicht insbesondere eine hydraulische Anpassung an unterschiedliche Rohrdurchmesser, ist wartungsfrei und kann für automatische Werkzeugwechsler eingesetzt werden.

Der Bohrkopf und der in Bohrrichtung vordere
Rohrabschnitt können am hinteren Rohrabschnitt
auswechselbar sein. Das kann durch Einschrauben
erfolgen oder durch Ausbildung des hinteren Abschnitts mit einer Spannzange oder dgl. Beide
Rohrabschnitte können auch einteilig ausgebildet sein, wobei lediglich eben der äußere
Durchmesser am Übergang entsprechend abgesetzt
ist.

Ein Ausführungsbeispiel der Erfindung und ihrer
vorteilhaften Weiterbildungen werden im folgenden
anhand der beigefügten Zeichnungen näher beschrieben. Es stellen dar:

Figur 1        ein Ausführungsbeispiel der Erfindung bei Anwendung des BTA-
               Verfahrens;

Figur 2        eine genauere Darstellung der in

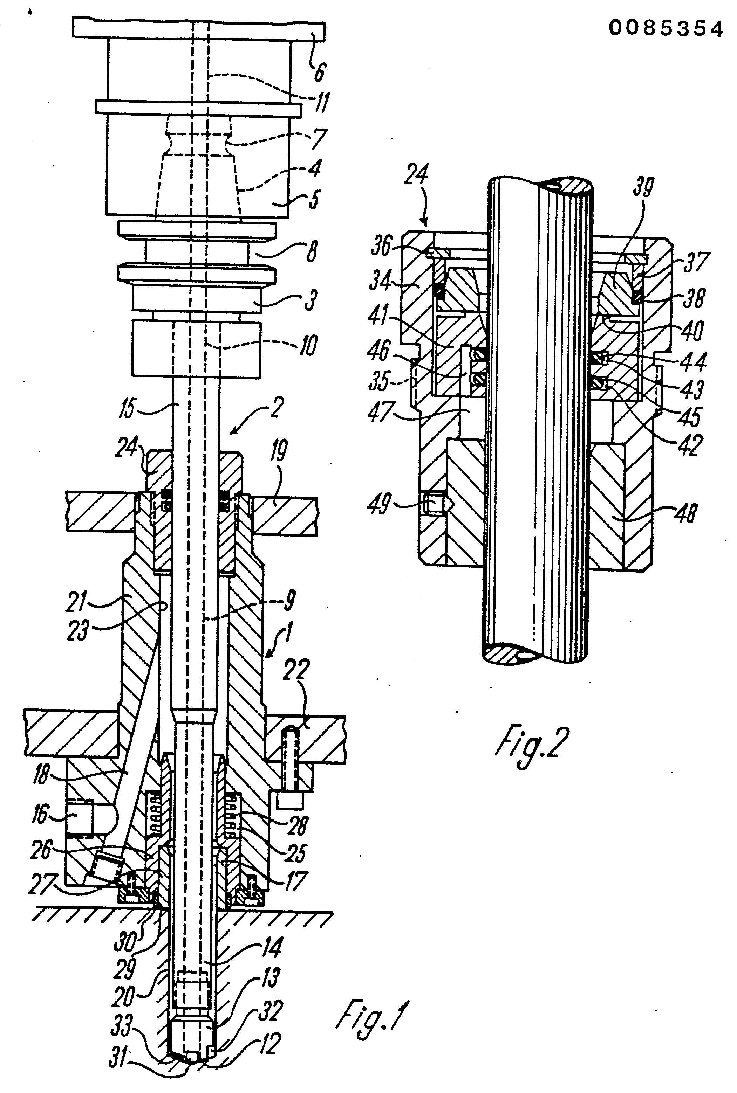

               Fig. 1 verwendeten Stopfbuchse 24.

Figur 1 zeigt einen Boza 1 einer Tiefbohrmaschine mit eingesetztem Werkzeug 2. Das Werkzeug 2 ist in einer Werkzeugaufnahme 3 fest aufgenommen; die Werkzeugaufnahme 3 weist einen Steckkonus 4 auf, mit dem die durch Werkzeug 2 und Werkzeugaufnahme 3 gebildete Einheit in den Aufnahmeteil 5 einer Werkzeugspindel 6 eingesteckt werden kann, der zur Verriegelung eine umlaufende Nut 7 aufweist, in die (nicht gezeigt) Klauen im Aufnahmeteil 5 eingreifen.

Ein Auswechseln der durch Werkzeug 2 und Werkzeugaufnahme 3 gebildeten Einheit kann erfolgen, wenn ein Greifer (nicht gezeigt) in die Nut 8 eingreift und die Werkzeugaufnahme 3 (mit Werkzeug 2) aus dem Aufnahmeteil 3 nach Entriegelung herauszieht. Dann kann derselbe Greifer aus einem Magazin ein

0085354

anderes Werkzeug entnehmen und es in den Aufnahmeteil einsetzen.

Das Werkzeug 2 ist ein Tiefbohrwerkzeug. Beim
Tiefbohren wird die Werkzeugspitze ständig
durch die Zufuhr von Bohröl gekühlt; beim Abtransport des Kühlschmierstoffes werden gleichzeitig die Späne abgeführt. Beim BTA-Verfahren
ist die Führung des Bohröls folgende: Das Bohröl wird dem Boza 1 über den Anschluß 16 und
Leitung 18 zugeführt. Er tritt vom Innenraum 23
des Gehäuses 21 des Boza 1 in den freien Raum 17
zwischen dem Rohrabschnitt 14 und der Bohrung 20
ein. Die Abfuhr mit den Spänen erfolgt durch den
Kanal 9, der sich in die Stirnfläche 12 des Bohrkopfes 13 öffnet, sowie die sich anschließenden
Kanäle 10, 11.

Das Gehäuse 21 des Boza 1 ist an einer Trägerplatte 22 befestigt, die mit dem Maschinenrahmen
(nicht gezeigt) verbunden ist. Der Innenraum 23
ist zur Werkzeugspindel 6 hin (oben in Figur 1)
durch eine Stopfbuchse 24 verschlossen (im
einzelnen siehe Figur 2), die den äußeren Umfang
(in Bohrrichtung) des hinteren Rohrabschnittes 15

4301 060

abdichtet. In Bohrrichtung d.h. in Figur 1 nach unten, erfolgt die Abdichtung dadurch, daß der in einer Ausnehmung 25 angeordnete Bohrbuchsenhalter 26 mit dem Dichtungsring 30 und der Bohrbuchse 27 durch eine Feder 28 gegen die Stirnfläche 29 der Bohrung 20 gedrückt wird.

Das Besondere des Werkzeuges 2 besteht darin, daß es zweistufig ausgebildet ist, d.h. aus einem vorderen Rohrabschnitt 14 und einem hinteren Rohrabschnitt 15 besteht. Der Außendurchmesser beider Rohrabschnitte ist verschieden. Der Durchmesser des in Bohrrichtung hinteren Rohrabschnittes 15 ist größer als der des Bohrkopfes 13 bzw. der Schneide 33 und der Bührungsleisten 31, 32. Er ist demgemäß auch größer als der des in Bohrrichtung vorderen Rohrabschnittes 14. Damit ist gewährleistet, daß beim Werkzeugwechsel das Werkzeug 2 in Bohrrichtung nach hinten, d.h. in Figur 1 nach oben, durch den gesamten Boza 1 herausgezogen werden kann. Der äußere Durchmesser der Führungsleisten 31, 32 ist jedoch nach wie vor gleich dem inneren Durchmesser der Bohrbuchse 27. Auf-

4301 060

grund der hier gewählten Konstruktion kann der Bohrkopf 13 nämlich auch durch die Stopfbuchse 24 hindurch aus dem Boza 1 herausbewegt werden. Dies geschieht, wenn sich zum Werkzeugwechsel die Werkzeugspindel 6 mit dem Aufnahmeteil 5 und dem Werkzeug 2 nach oben bewegt.

Durch diese zweistufige Ausbildung ist also gewährleistet, daß im Betrieb die Stopfbuchse 24 gegenüber dem hinteren Rohrabschnitt 15 eine Dichtung bildet, und daß andererseits der Bohrkopf 13, der einen geringeren Durchmesser hat als der hintere Rohrabschnitt 15, beim Werkzeugwechsel durch die Stopfbuchse 24 hindurch bewegt werden kann. Dies ist nur dann möglich, wenn der Bohrkopf 13 sich an einem Rohrabschnitt 14 befindet, der wiederum geringeren Durchmesser hat als der Bohrkopf 13. Diese Ausbildung gewährleistet also erstmalig, daß zum Werkzeugwechsel das gesamte Werkzeug ohne Demontage aus dem Boza ausgefahren werden kann. Damit ist auch ein einfacher Werkzeugwechsel im Aufnahmeteil 5 der Werkzeugspindel 6 möglich.

4301 060

Figur 2 zeigt die Stopfbuchse 24. Sie besteht aus einer Hülse 34 mit Außengewinde 35, das in das Gehäuse 21 eingeschraubt ist. Ein Gleitring 39 wird durch Seeger-Ring 36 und Distanzhülse 37 gehalten und mittels Dichtungsring 38 abgedichtet. An ihm liegt in axialer Richtung die Gleitschulter 40 eines Dichtungsringes 41 an, in dem zwei Nuten 42 und 43 vorgesehen sind, in denen O-Ringe 44 und 45 angeordnet sind. Die Nuten 42 und 43 stehen radial außen mit einer Bohrölzuführbohrung 46 in Verbindung, die sich nach unten hin in den freien zylindrischen Innenraum 47 der Hülse 34 hinein öffnet. In der Hülse 34 ist ferner eine Lagerschale 48 angeordnet, die durch einen Gewindestift 49 in ihrer Position gehalten wird. Durch den Spalt zwischen Rohrabschnitt 15 und Lagerschale 48 dringt vom Raum 23 unter Druck stehendes Bohröl in den Innenraum 47 und in die Bohrölzuführbohrung 46. Damit wirkt das unter Druck befindliche Bohröl auch in den Nuten 42 und 43 von außen auf die O-Ringe 44 und 45 und drückt diese nach innen auf die Oberfläche des hinteren Rohrabschnittes 15.

Ganz allgemein ist über die Ausbildung des den Bohrkopf 13 tragenden Rohres als durch zwei Rohrabschnitte gebildetes zweistufiges Tiefbohrwerkzeug noch zu ergänzen, daß die beiden Rohrabschnitte 14, 15 z.B. dadurch ausgebildet werden können, daß sie aus einem Teil mit entsprechend abgesetzten Außenabmessern hergestellt sind. Es ist aber auch möglich, beide Abschnitte getrennt herzustellen und sie miteinander zu verschrauben oder zu verschweissen. Eine Verschraubung hat den Vorteil, daß an einem hinteren Rohrabschnitt die vorderen Rohrabschnitte mit Bohrköpfen für verschiedene Durchmesser ausgewechselt werden können. Es ist auch möglich, am Ende des hinteren Rohrabschnittes eine Spannzange vorzusehen, in der der vordere im Durchmesser kleinere Rohrabschnitt aufgenommen wird. Der äußere Umfang der Spannzange darf dabei nicht größer sein als der äußere Umfang des hinteren Rohrabschnittes.

- Ende der Beschreibung -

4301 060

# DREISS, HOSENTHIEN & FUHLENDORF

**HANS LANGOSCH**
Dipl.-Ing. (1963-1981)
**UWE DREISS**
Dr. jur., Dipl.-Ing., M. Sc.
**HEINZ HOSENTHIEN**
Dr.-Ing., Dipl.-Ing.
**JÖRN FUHLENDORF**
Dipl.-Ing.

PATENTANWÄLTE

Beim Europäischen Patentamt zugelassene Vertreter
European Patent Attorneys

D-7000 STUTTGART 1
GERBERSTRASSE 6
TF (0711) 24 57 34/44
TG IDEAPAT
TX 7-22247 idea d

P für Besucher

0085354

┌ DREISS, HOSENTHIEN & FUHLENDORF, D-7000 STUTTGART 1 ┐

Anmelder:

Tiefbohr-Technik Gesellschaft
mit beschränkter Haftung und Co.
Kommanditgesellschaft

Siemensstraße 1

7417  Dettingen

└ ┘

| Amtl. Akt. Z. | Ihr Zeichen | Unser Zeichen | Datum |
| Off. Ser. No. | Your Ref. | Our Ref. | Date |

Titel:  Tiefbohrwerkzeug

## Patentansprüche

1. Tiefbohrwerkzeug, gebildet durch ein mit einem Innenkanal versehenes Rohr, an dessen Ende ein Bohrkopf (13) angebracht ist, **dadurch gekennzeichnet**, daß das Rohr durch zwei Rohrabschnitte (14, 15) gebildet wird, von denen der Außendurchmesser des in Bohrrichtung vorderen Rohrabschnittes (14) geringer als der Bohrdurchmesser des Bohrkopfes (13) und der Bohrdurchmesser des Bohrkopfes (13) geringer als der Außendurchmesser des in Bohrrichtung hinteren Rohrabschnittes (15) ist.

-2-

0085354

2. Tiefbohrwerkzeug nach Anspruch 1, dadurch gekennzeichnet, daß die Länge des in Bohrrichtung vorderen Rohrabschnitts (14) gleich der Länge der Bohrung (20) zuzüglich der Länge des Bohrbuchsenhalters ist.

3. Tiefbohrwerkzeug nach Anspruch 1 oder 2, dadurch gekennzeichnet, daß die beiden Rohrabschnitte (14, 15) derart lösbar untereinander verbunden sind, daß der in Bohrrichtung vordere Rohrabschnitt (14) mit oder ohne Bohrkopf (13) auswechselbar ist.

4. Tiefbohrwerkzeug nach Anspruch 1 oder einem der folgenden zur Verwendung im Einlippen-Bohrverfahren mit einer am äußeren Umfang vorgesehenen in Achsrichtung verlaufenden zur Abfuhr des Kühlmittels und der Späne bestimmten Nut, dadurch gekennzeichnet, daß die Nut (53) im in Bohrrichtung vorderen Rohrabschnitt (52) angebracht ist.

5. Bohrölzuführapparat für eine Tiefbohrmaschine bei Verwendung eines Werkzeuges nach Anspruch 1, der durch ein Gehäuse (21) mit einer Leitung (16, 18) zur Zufuhr von Bohröl versehen ist gebildet ist, das zur Bohrung (20) durch eine mit Feder-

4301 060

- 3 -    0085354

kraft (28) angedrückte Bohrbuchse und zur Werkzeugspindel (6) der Tiefbohrmaschine hin durch eine Stopfbuchse (24) abgedichtet wird, bei der Dichtungsringe (44, 45) in Nuten (42, 43) angeordnet sind, dadurch gekennzeichnet, daß die Nuten (42, 43) in radialer Richtung nach außen mit dem Innenraum (23) des Gehäuses (21) in Verbindung stehen (46) und von dem Bohröl zusammenpressbar sind.

- Ende der Ansprüche -

4301 060

0085354

Fig.1

Fig.2